# EUROPÄISCHE PATENTSCHRIFT

(11) **EP 3 841 659 B1**
(45) Veröffentlichungstag und Bekanntmachung des Hinweises auf die Patenterteilung: **06.07.2022**
(21) Anmeldenummer: 19731136.8
(22) Anmeldetag: 29.05.2019
(51) Int. Cl.: H02K 15/02, H02K 1/14

(54) **KOMPAKTE FERTIGUNGSSTATION ZUM ZUSAMMENFÜGEN EINES STATORS FÜR EINEN ELEKTROMOTOR AUS STATORSEGMENTEN**
COMPACT PRODUCTION STATION FOR ASSEMBLING A STATOR FOR AN ELECTRIC MOTOR FROM STATOR SEGMENTS
STATION DE FABRICATION COMPACTE POUR ASSEMBLER UN STATOR POUR MOTEUR ÉLECTRIQUE À PARTIR DE SEGMENTS DE STATOR

(30) Priorität: 20.08.2018 DE 102018120235
(43) Veröffentlichungstag der Anmeldung: 30.06.2021
(73) Patentinhaber: Schaeffler Technologies AG & Co. KG, 91074 Herzogenaurach (DE)
(72) Erfinder: STOPFER, Thilo, 91056 Erlangen (DE)
(86) Internationale Anmeldenummer: PCT/DE2019/100476
(87) Internationale Veröffentlichungsnummer: WO 2020/038515

(56) Entgegenhaltungen:
- CN-A- 107 994 690
- US-A- 5 149 000
- US-A1- 2010 231 086

## Beschreibung

Die Erfindung betrifft eine Vorrichtung zum Zusammenfügen eines Stators für eine elektrische Maschine aus Statorsegmenten. Ferner betrifft die Erfindung ein Verfahren zum Zusammenfügen eines Stators für eine elektrische Maschine aus Statorsegmenten.

Aus Statorsegmenten hergestellte Statoren für elektrische Maschinen bieten deutliche Vorteile gegenüber herkömmlichen Statoren, welche nicht aus Segmenten hergestellt werden. Mit den segmentierten Statoren sind beispielsweise ein höherer Kupferfüllfaktor, die Verwendung von Profildrähten und ein hoher Ausnutzungsgrad des Elektroblechs möglich.

Um eine hinreichende Maßhaltigkeit des Stators sicherzustellen, müssen die Statorsegmente fest und in der vorgesehenen Form miteinander verbunden werden. Häufig finden dazu in die Segmente eingearbeitete Schwalbenschwänze Anwendung. Dabei werden die Statorsegmente axial ineinander geschoben, wobei die Schwalbenschwänze die Statorsegmente wie Puzzelteile formschlüssig miteinander verbinden.

Der Schwalbenschwanz am Statorsegment bedeutet jedoch einen erhöhten Produktionsaufwand der Statorsegmente mit stark erhöhten Anforderungen an die Maßhaltigkeit der Statorbleche. Zudem schwindet bei kleineren elektrischen Maschinen aufgrund des beschränkten Platzangebots die Möglichkeit, Schwalbenschwänze in die Statorsegmente einzufügen.

Ein Ansatz zur Lösung dieses Problems ist das Verpressen von Statorsegmenten und anschließende Einfügen der Statorsegmente in ein Gehäuse. Ist die Wandung des Maschinengehäuses ausreichend stark, können die Segmente direkt in das Gehäuse gepresst und durch die Presspassung kalibriert werden. Solche Gehäuse sind jedoch nachteilig für Gewicht und Bauraum.

Die Druckschrift DE 10 2014 213 593 B4 offenbart eine Vorrichtung und ein Verfahren zum Herstellen eines Stators aus Statorsegmenten, wobei die Segmente ebenfalls ohne Formschluss verpresst und kalibriert werden. Dazu offenbart sie eine Presse mit ringförmig angeordneten Pressstempeln und einen Haltedorn, welcher sich beim Pressen radial innerhalb der zu verpressenden Statorsegmente befindet. Die verpressten Statorsegmente müssen zwischen dem Verpressen und dem Einfügen in das Gehäuse relativ aufwändig gehalten werden. Die Dokumente CN107994690 A und US2010/231086 A1 offenbaren Vorrichtungen und Verfahren zur Herstellung eines Stators aus Statorsegmenten.

Vor diesem Hintergrund stellt sich die Aufgabe, eine Vorrichtung und ein Verfahren zur Verfügung zu stellen, welches die oben geschilderten Nachteile des Standes der Technik nicht aufweist, sondern auf möglichst geringem Raum ein schnelles und sicheres Zusammenfügen der Statorsegmente ermöglicht.

Die Aufgabe wird gelöst durch eine Vorrichtung zum Fertigen eines Stators für eine elektrische Maschine, wobei die Vorrichtung eine Segmentzuführung zum Zuführen von Statorsegmenten, eine im Wesentlichen hohlzylinderförmige Presse zum Verpressen der Statorsegmente und eine Gehäusezuführung zum Zuführen von Statorgehäusen aufweist, wobei die Vorrichtung einen Dorn zur Aufnahme der Statorsegmente aufweist, wobei der Dorn in axialer Richtung einen ersten Bereich, einen zweiten Bereich und einen dritten Bereich aufweist, wobei der erste Bereich einen in axialer Richtung im Wesentlichen konstanten ersten Radius aufweist, der zweite Bereich einen in axialer Richtung im Wesentlichen konstanten zweiten Radius aufweist und der dritte Bereich einen in axialer Richtung im Wesentlichen konstanten dritten Radius aufweist, dadurch gekennzeichnet, dass der erste Radius größer ist als der zweite Radius und der zweite Radius größer ist als der dritte Radius.

Die erfindungsgemäße Vorrichtung erlaubt das Aufnehmen der Statorsegmente mit dem Dorn, wobei der Dorn durch seine drei unterschiedlich gestalteten Bereiche zur Verwendung in einer Mehrzahl von Schritten während des Zusammenfügens der Statorsegmente geeignet ist. Der Dorn weist eine Haupterstreckungsrichtung entlang seiner Längsachse auf und ist entlang der Längsachse im Wesentlichen radialsymmetrisch. Vorzugsweise ist der erste Radius derart gestaltet, dass der Umfang des ersten Bereiches so groß ist, dass alle für einen Stator zusammenzufügenden Statorsegmente in Umfangsrichtung nebeneinander auf der Oberfläche des ersten Bereiches angeordnet werden können.

Die Vorrichtung weist drei Fertigungsstationen auf. Im Sinne der vorliegenden Erfindung ist die Segmentzuführung eine erste Fertigungsstation, die Presse ist eine zweite Fertigungsstation und die Gehäusezuführung ist eine dritte Fertigungsstation. Die erste Fertigungsstation, die zweite Fertigungsstation und die dritte Fertigungsstation sind vorzugsweise als Eckpunkte eines im Wesentlichen gleichseitigen Dreiecks angeordnet.

Denkbar ist, dass die Vorrichtung neben dem Dorn einen weiteren Dorn und einen zweiten weiteren Dorn aufweist. Der weitere Dorn und der zweite weitere Dorn weisen alle Merkmale des Dorns auf. Der Dorn, der weitere Dorn und der zweite weitere Dorn sind dabei so konfiguriert, dass wenn der Dorn an der ersten Fertigungsstation angeordnet ist, der weitere Dorn an der zweiten Fertigungsstation angeordnet ist und der zweite weitere Dorn an der dritten Fertigungsstation angeordnet ist. Weiterhin sind der Dorn, der weitere Dorn und der zweite weitere Dorn dabei so konfiguriert, dass wenn der Dorn an der zweiten Fertigungsstation angeordnet ist, der weitere Dorn an der dritten Fertigungsstation angeordnet ist und der zweite weitere Dorn an der ersten Fertigungsstation angeordnet ist. Ferner sind der Dorn, der weitere Dorn und der zweite weitere Dorn dabei so konfiguriert, dass wenn der Dorn an der dritten Fertigungsstation angeordnet ist, der weitere Dorn an der ersten Fertigungsstation angeordnet ist und der zweite weitere Dorn an der zweiten Fertigungsstation angeordnet ist. Der Dorn, der weitere Dorn und der zweite weitere Dorn sind also so konfiguriert, dass die Position eines Dornes die Position der anderen Dorne bestimmt und dass wenn ein Dorn an einer der Fertigungsstationen angeordnet ist, an den übrigen Fertigungsstationen ebenfalls jeweils ein Dorn angeordnet ist.

Gemäß einer bevorzugten Ausführungsform der vorliegenden Erfindung ist vorgesehen, dass der Dorn von der Segmentzuführung zur Presse, von der Presse zur Gehäusezuführung und von der Gehäusezuführung zur Segmentzuführung bewegbar ist, wobei vorzugsweise der Dorn an einem beweglichen Dornarm an einem Turm der Vorrichtung angeordnet ist, wobei der Turm zentral zwischen der Segmentzuführung, der Presse und der Gehäusezuführung angeordnet ist. Dies ermöglicht eine sehr platzsparende Realisierung der Vorrichtung.

Denkbar ist, dass der Turm ein Drehturm ist. Denkbar ist, dass die Vorrichtung einen beweglichen weiteren Dornarm und einen beweglichen zweiten weiteren Dornarm aufweist, wobei der weitere Dorn an dem weiteren Dornarm an dem Turm befestigt ist und der zweite weitere Dorn an dem zweiten weiteren Dornarm an dem Turm befestigt ist. Vorzugsweise sind der Dornarm, der weitere Dornarm und der zweite weitere Dornarm bezüglich der Horizontalen winkelig zueinander angeordnet, wobei der Winkel zwischen dem Dornarm und dem weiteren Dornarm 120° beträgt und der Winkel zwischen dem weiteren Dornarm und dem zweiten weiteren Dornarm 120° beträgt. Denkbar ist, dass der Dornarm einen Antrieb zum Bewegen des Dornarms entlang der Haupterstreckungsrichtung des Turmes aufweist. Denkbar ist weiterhin, dass der weitere Dornarm einen weiteren Antrieb zum Bewegen des weiteren Dornarms entlang der Haupterstreckungsrichtung des Turmes aufweist und dass dass der zweite weitere Dornarm einen zweiten weiteren Antrieb zum Bewegen des zweiten weiteren Dornarms entlang der Haupterstreckungsrichtung des Turmes aufweist.

Gemäß einer weiteren bevorzugten Ausführungsform der vorliegenden Erfindung ist vorgesehen, dass der Dorn zur Drehung um seine Längsachse einen Axialantrieb aufweist, wobei der Dorn vorzugsweise zur Drehung um eine orthogonal zur Längsachse angeordnete Drehachse einen Kippantrieb aufweist, wobei vorzugsweise der Dorn parallel zur Haupterstreckungsrichtung des Turmes verfahrbar ist. Dies ermöglicht eine gute Anpassbarkeit des Dorns an die Lage der zugeführten Statorsegmente und der zweiten Fertigungsstation und der dritten Fertigungsstation und damit ein genaues und einfaches Aufnehmen und Weiterverarbeiten der Statorsegmente. Denkbar ist, dass Das Verfahren des Dorns parallel zur Haupterstreckungsebene des Turms durch Verfahren des Dornarms realisiert ist.

Gemäß einer weiteren bevorzugten Ausführungsform der vorliegenden Erfindung ist vorgesehen, dass der erste Bereich zur Aufnahme der Statorsegmente in der Segmentzuführung und zum Zuführen der aufgenommenen Statorsegmente zur Presse konfiguriert ist und wobei der dritte Bereich zur Vermeidung eines zu starken Pressens der Statorsegmente während des Verpressens der Statorsegmente in der Presse konfiguriert ist und wobei der zweite Bereich zur Aufnahme der Statorsegmente in der Presse nach dem Verpressen und zum Zuführen der verpressten Statorsegmente zur Gehäusezuführung konfiguriert ist, wobei dazu der erste Bereich vorzugsweise einen ersten Elektromagneten und/oder vorzugsweise eine als Ausrichtkontur zum Ausrichten der Statorsegmente auf dem ersten Bereich konfigurierte Oberflächenstruktur aufweist und wobei der zweite Bereich vorzugsweise einen zweiten Elektromagneten aufweist. Dies ermöglicht, den Dorn als Werkzeug und Transportmittel in beziehungsweise zwischen den Fertigungsstationen zu verwenden. Denkbar ist, dass der Durchmesser des dritten Bereiches kleiner ist als der Innendurchmesser des herzustellenden Stators. Denkbar ist weiterhin, dass der Durchmesser des zweiten Bereichs etwa dem Durchmesser des herzustellenden Stators entspricht. Vorzugsweise ist die Ausrichtkontur derart konfiguriert, dass die dem ersten Bereich zugeführten Statorsegmente in gleichen Abständen und parallel zueinander auf der Oberfläche des ersten Bereiches ausgerichtet werden. Denkbar ist, dass die Oberfläche des ersten Bereiches dazu Vertiefungen oder Rippen aufweist, in welche die Segmente locker eingreifen.

Gemäß einer weiteren bevorzugten Ausführungsform der vorliegenden Erfindung ist vorgesehen, dass der dritte Bereich eine Messvorrichtung zum Erkennen eines elektrischen Kontaktes zwischen der Oberfläche des dritten Bereiches und der Presse aufweist. Dies ermöglicht in vorteilhafter Weise ein rechtzeitiges Stoppen des Verpressens in der Presse. Dazu wird zwischen der Presse und dem dritten Bereich über die Statorbleche der Statorsegmente ein elektrischer Kontakt hergestellt. Denkbar ist, dass ein zwischen der Presse und dem dritten Bereich fließender Strom gemessen wird. Fließt ein Strom zwischen der Presse und dem dritten Bereich, so sind die Statorsegmente so verpresst, dass der Innendurchmesser des aus den verpressten Statorsegmenten gebildeten Hohlzylinders kleiner ist als der Innendurchmesser des herzustellenden Stators. Der Durchmesser des dritten Bereichs ist vorzugsweise so gestaltet, dass sich der Innendurchmesser des aus den verpressten Statorsegmenten gebildete Hohlzylinder nach dem Verpressen durch eine Elastizität der Statorsegmente auf den gewünschten Innendurchmesser des herzustellenden Stators ausdehnt.

Ein weiterer Gegenstand zur Lösung der eingangs formulierten Aufgabe der vorliegenden Erfindung ist ein Verfahren zum Herstellen eines Stators für eine elektrische Maschine aus Statorsegmenten mit einer Vorrichtung gemäß einem der vorhergehenden Ansprüche, wobei in einem ersten Schritt die Statorsegmente in der Segmentzuführung vom ersten Bereich des Dorns aufgenommen, im Wesentlichen hohlzylinderförmig auf der Oberfläche des ersten Bereiches angeordnet und der Presse zugeführt werden, wobei in einem zweiten Schritt die Statorsegmente in der Presse hohlzylinderförmig verpresst werden, wobei der dritte Bereich während des Verpressens derart in der Presse angeordnet wird, dass durch den dritten Bereich ein Überpressen der Statorsegmente verhindert wird, wobei die Statorsegmente nach dem Verpressen auf der Oberfläche des zweiten Bereiches angeordnet werden und der Gehäusezuführung zugeführt werden, wobei in einem dritten Schritt der Gehäusezuführung ein Gehäuse zugeführt wird, wobei das Gehäuse in der Gehäusezuführung erhitzt wird, wobei die Statorsegmente mittels des Dorns im Gehäuse angeordnet werden. Dies erlaubt auf vorteilhafte Weise das Zusammenführen der Statorsegmente auf kleinem Bauraum mit einem Dorn, welcher in bzw. zwischen einer Mehrzahl von Fertigungsstationen als Werkzeug bzw. Transportmittel eingesetzt werden kann. Weiterhin ist das Verfahren sehr flexibel im Hinblick auf einen Wechsel der Größe des Stators. Um die Größe der mit der Vorrichtung und dem Verfahren zusammengefügten Statoren zu ändern müssen lediglich der Dorn ausgetauscht und Änderungen an der Presse, beispielsweise ein Austausch von Presswerkzeugen, vorgenommen werden.

Denkbar ist, dass die Statorsegmente als separate bewickelte Statorzähne oder als fertig bewickelte Aneinanderreihung seriell gewickelter Segmente der Vorrichtung zugeführt werden. Denkbar ist weiterhin, dass die Statorsegmente in einer im Wesentlichen horizontalen Ebene der Vorrichtung zugeführt werden.

Denkbar ist, dass während des ersten Schrittes der zweite Schritt mit dem weiteren Dorn und weiteren Statorsegmenten durchgeführt wird und dass während des ersten Schrittes der dritte Schritt mit dem zweiten weiteren Dorn und zweiten weiteren Statorsegmenten durchgeführt wird. Dazu ist denkbar, dass während des zweiten Schrittes der dritte Schritt mit dem weiteren Dorn und weiteren Statorsegmenten durchgeführt wird und dass während des zweiten Schrittes der erste Schritt mit dem zweiten weiteren Dorn und zweiten weiteren Statorsegmenten durchgeführt wird. Weiterhin ist dazu denkbar, dass während des dritten Schrittes der erste Schritt mit dem weiteren Dorn und weiteren Statorsegmenten durchgeführt wird und dass während des dritten Schrittes der zweite Schritt mit dem zweiten weiteren Dorn und zweiten weiteren Statorsegmenten durchgeführt wird. Hierzu ist denkbar, dass der erste Schritt, der zweite Schritt und der dritte Schritt zeitlich so durchgeführt werden, dass für die Durchführung des ersten Schrittes, des zweiten Schrittes und des dritten Schrittes jeweils die gleiche Zeitspanne benötigt wird.

Nach dem Zuführen der Statorsegmente in die Presse kann der Dorn derart verfahren, dass der dritte Bereich im Innenraum des durch die Statorsegmente gebildeten Hohlzylinders angeordnet ist. Die Statorsegmente können im ersten Schritt nur grob auf der Oberfläche des ersten Bereiches angeordnet sein. Durch das Verpressen im zweiten Schritt können die Statorsegmente ausgerichtet und die Form des Hohlzylinders kalibriert werden. Der dritte Bereich kann dabei als Kontaktfläche, welche ein zu starkes Überpressen der Statorsegmente verhindert, wirken. Nach dem Verpressen kann die Presse gelöst werden und der Hohlzylinder kann sich elastisch entspannen. Dabei kann sich der Innendurchmesser des Hohlzylinders auf ein Sollmaß, welches dem Innendurchmesser des herzustellenden Stators entspricht, vergrößern.

Anschließend können die Statorsegmente der Gehäusezuführung zugeführt werden. Der Gehäusezuführung kann ein Gehäuse zugeführt werden, welches erhitzt wird. Das Erhitzen kann beispielsweise induktiv geschehen. Der Dorn kann daraufhin mit den auf dem zweiten Bereich angeordneten Statorsegmenten in das Gehäuse verfahren werden, wo die Statorsegmente vorzugsweise mittels thermischem Fügeverband, Pressverband oder Klebeverband fixiert werden können. Nach dem Fixieren kann der Dorn ohne die Statorsegmente wieder aus dem Gehäuse heraus gefahren werden.

Gemäß einer weiteren bevorzugten Ausführungsform der vorliegenden Erfindung ist vorgesehen, dass im ersten Schritt zum Anordnen der Statorsegmente auf der Oberfläche des ersten Bereiches der Dorn um seine Längsachse gedreht wird und gleichzeitig die Statorsegmente dem Dorn zugeführt werden, wobei die Statorsegmente auf den ersten Bereich aufgewickelt werden, wobei vorzugsweise die Statorsegmente beim Aufwickeln von der Ausrichtkontur des ersten Bereichs ausgerichtet werden. Dies ermöglicht ein geschicktes, einfaches und sicheres Aufnehmen der Statorsegmente. Denkbar ist, dass dabei die Statorsegmente mit einer Ausrichtkontur auf der Oberfläche des ersten Bereiches ausgerichtet werden.

Gemäß einer weiteren bevorzugten Ausführungsform der vorliegenden Erfindung ist vorgesehen, dass die Statorsegmente im ersten Schritt während des Aufnehmens und während des Zuführens zur Presse durch den ersten Elektromagneten am ersten Bereich gehalten werden und/oder im zweiten Schritt die Statorsegmente während des Zuführens zur Gehäusezuführung durch den zweiten Elektromagneten am zweiten Bereich gehalten werden und/oder im dritten Schritt die Statorsegmente während des Anordnens im Gehäuse durch den zweiten Elektromagneten am zweiten Bereich gehalten werden und nach dem Anordnen der Elektromagnet abgeschaltet wird und der Dorn von den Statorsegmenten weg verfahren wird. Dies nutzt auf vorteilhafte Weise die guten magnetischen Eigenschaften der Statorsegmente aus. Denkbar ist, dass zusätzlich zum Verpressen die Statorsegmente im zweiten Schritt beim Zuführen der Statorsegmente zur Gehäusezuführung vom zweiten Elektromagneten ausgerichtet werden.

Gemäß einer weiteren bevorzugten Ausführungsform der vorliegenden Erfindung ist vorgesehen, dass im zweiten Schritt die Statorsegmente von der Presse zu einem Hohlzylinder verpresst werden, wobei durch die Presse zum Verpressen ein radialer Druck auf die Statorsegmente ausgeübt wird, wobei das Ausüben des radialen Drucks auf die Statorsegmente beendet wird, wenn ein elektrischer Kontakt zwischen dem dritten Bereich und der Presse erkannt wird, wobei vorzugsweise nach dem Verpressen Presswerkzeuge der Presse von den Statorsegmenten beabstandet werden. Damit ist vorteilhaft sichergestellt, dass kein zu starkes Überpressen der Statorsegmente stattfindet, sondern dass das Verpressen beim Kontakt der Statorsegmente mit dem dritten Bereich eingestellt wird.

Gemäß einer weiteren bevorzugten Ausführungsform der vorliegenden Erfindung ist vorgesehen, dass im ersten Schritt der Dorn mit seiner Längsachse im Wesentlichen parallel zur Haupterstreckungsrichtung der einzelnen Statorsegmente ausgerichtet wird und während des Zuführens zur Presse mit seiner Längsachse parallel zur Haupterstreckungsrichtung der Presse ausgerichtet wird. Dies ermöglicht auf vorteilhafte Weise ein horizontales Zuführen der Statorsegmente, beispielsweise auf einem Förderband, während das Verpressen und das Einfügen der Statorsegmente in das Gehäuse in einer für diese Prozesse vorteilhaften vertikalen Ausrichtung stattfinden können.

Weitere Einzelheiten und Vorteile der Erfindung sollen nachfolgend anhand des in den Zeichnungen dargestellten Ausführungsbeispiels erläutert werden. Hierin zeigt:
- Fig. 1: schematisch ein Ausführungsbeispiel einer erfindungsgemäßen Vorrichtung zum Fertigen eines Stators;
- Fig. 2: schematisch einen Dorn einer Vorrichtung zum Fertigen eines Stators gemäß einer beispielhaften Ausführungsform der vorliegenden Erfindung;
- Fig. 3: schematisch einen Teil des ersten Schrittes des Verfahrens zum Herstellen eines Stators gemäß einer beispielhaften Ausführungsform der vorliegenden Erfindung;
- Fig. 4: schematisch einen Teil des zweiten Schrittes des Verfahrens zum Herstellen eines Stators gemäß einer beispielhaften Ausführungsform der vorliegenden Erfindung; und

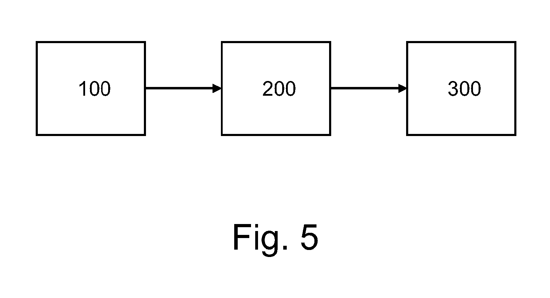

- Fig. 5: schematisch das Verfahrens zum Herstellen eines Stators gemäß einer beispielhaften Ausführungsform der vorliegenden Erfindung.

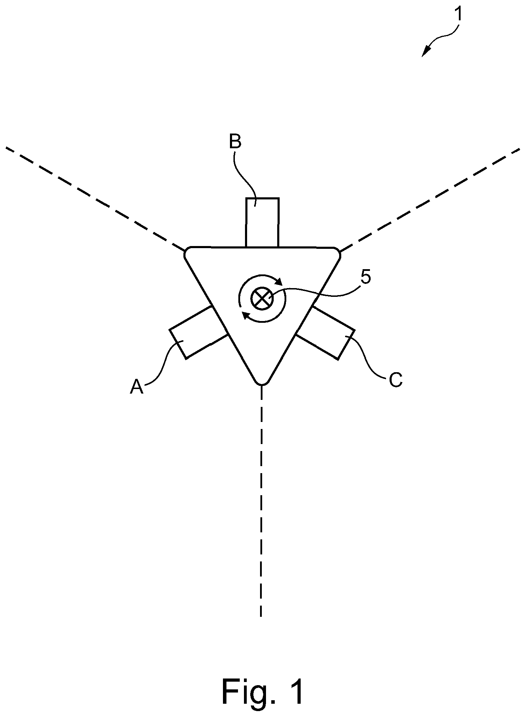

In der Fig. 1 ist schematisch ein Ausführungsbeispiel einer erfindungsgemäßen Vorrichtung 1 zum Fertigen eines Stators dargestellt. Die Vorrichtung 1 weist eine Segmentzuführung A, eine Presse B und eine Gehäusezuführung C auf. Die Segmentzuführung A, die Presse B und die Gehäusezuführung C sind um einen Turm 5 herum angeordnet und bilden ein gleichseitiges Dreieck. Der Turm 5 ist als Drehturm ausgeführt.

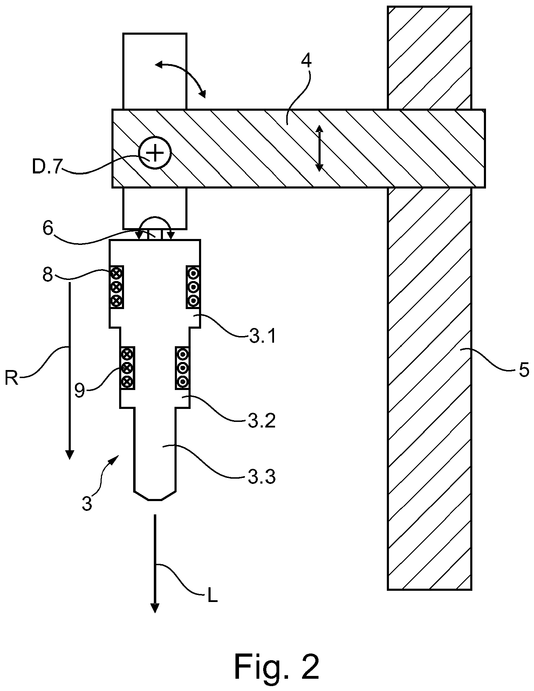

In der Fig. 2 ist schematisch ein Dorn 3 der Vorrichtung 1 zum Fertigen eines Stators gemäß einer beispielhaften Ausführungsform der vorliegenden Erfindung dargestellt. Der Dorn 3 ist mit einem Dornarm 4 am Turm 5 befestigt und an einer Verbindung zum Dornarm 4 um eine Drehachse D mit einem Kippantrieb 7 drehbar gelagert. Der Dorn 3 ist weiterhin um seine Längsachse L mit einem Axialantrieb 6 drehbar. In radialer Richtung R weist der Dorn 3 drei unterschiedliche Bereiche auf. Ein erster Bereich 3.1 des Dorns hat einen ersten Radius, ein zweiter Bereich 3.2 des Dorns 3 hat einen zweiten Radius, welcher geringer ist als der erste Radius. Ein dritter Bereich 3.3 des Dorns 3 hat einen dritten Radius, welcher wiederum geringer ist als der zweite Radius. Im ersten Bereich 3.1 ist ein erster Elektromagnet 8 angeordnet, im zweiten Bereich 3.2 ist ein zweiter Elektromagnet 9 angeordnet. Der dritte Bereich 3.3 weist keinen Elektromagneten auf.

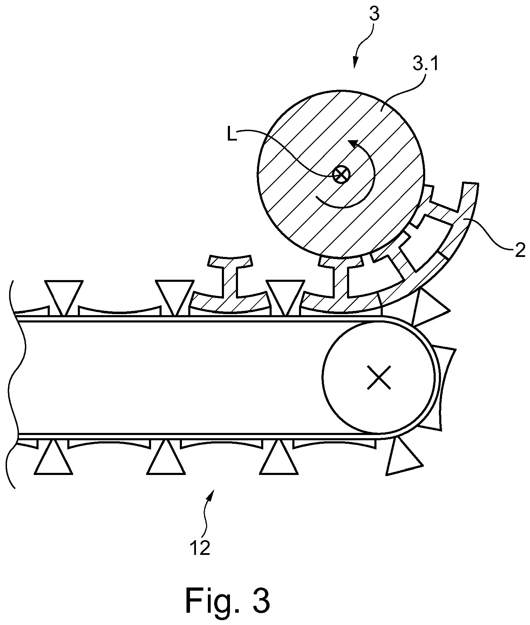

In der Fig. 3 ist schematisch ein Teil des ersten Schrittes 100 des Verfahrens zum Herstellen eines Stators gemäß einer beispielhaften Ausführungsform der vorliegenden Erfindung dargestellt. Der Dorn 3 ist hier mit seiner Längsachse L parallel zur Haupterstreckungsrichtung mehrerer Statorsegmente 2 ausgerichtet, welche dem Dorn 3 mit einem Förderband 12 zugeführt und vom ersten Bereich 3.1 des Dorns 3 aufgewickelt werden. Dazu dreht sich der Dorn 3 um seine Längsachse L. Der erste Elektromagnet (der Übersichtlichkeit halber nicht eingezeichnet, siehe Fig. 2) zieht die Statorsegmente 2 an und hält diese auf der Oberfläche des ersten Bereiches 3.1.

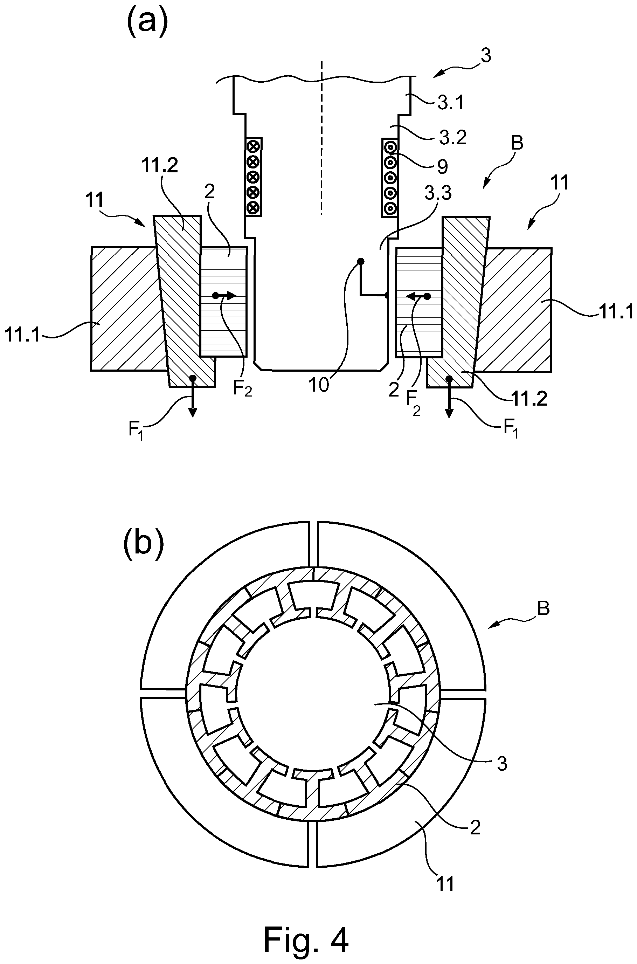

In der Fig. 4 ist schematisch ein Teil des zweiten Schrittes 200 des Verfahrens zum Herstellen eines Stators gemäß einer beispielhaften Ausführungsform der vorliegenden Erfindung dargestellt. Fig. 4 (a) zeigt einen Schnitt durch die Presse B mit den Statorsegmenten 2 und dem Dorn 3. Die Statorsegmente 2 sind innerhalb der Presse B angeordnet und werden von einem Presswerkzeug 11 umschlossen. Das Presswerkzeug 11 weist einen statischen Presswerkzeugteil 11.1 und einen beweglichen Presswerkzeugteil 11.2 auf. Der bewegliche Presswerkzeugteil 11.2 wird mit einer axialen Kraft F₁ nach unten gedrückt. Dadurch, dass der bewegliche Presswerkzeugteil 11.2 den statischen Presswerkzeugteil 11.1 an einer relativ zur radialen Kraft F₁ schrägen Kontaktfläche, welche in Richtung der Statorsegmente 2 geneigt ist, berührt, führt die durch die radiale Kraft F₁ bewirkte Bewegung nach unten gleichzeitig zu einer axialen Kraft F₂ in Richtung der Statorsegmente 2, welche durch die axiale Kraft F₂ verpresst werden. Die Statorsegmente 2 umschließen den dritten Bereich 3.3 des Dorns 3. Werden die Statorsegmente 2 verpresst, so bewegen sie sich in Richtung des dritten Bereichs 3.3. Sobald die Statorsegmente 2 in Kontakt mit dem dritten Bereich 3.3 kommen, registriert eine Messvorrichtung 10 einen Stromfluss zwischen der Presse B, genauer gesagt zwischen dem Presswerkzeug 11, und dem dritten Bereich 3.3. Sobald ein Strom von der Messvorrichtung 10 gemessen wird, schaltet die Presse B die axiale Kraft F₁ und damit auch die radiale Kraft F₂ ab und fährt das Presswerkzeug 11 von den Statorsegmenten 2 zurück. Die verpressten Statorsegmente 2 entspannen sich und der Innendurchmesser des durch die Statorsegmente 2 gebildeten Hohlzylinders vergrößert sich auf das Sollmaß des Innendurchmessers des herzustellenden Stators. Figur 4 (b) zeigt einen weiteren Schnitt in Aufsicht auf die Presse B mit den Statorsegmenten 2 und dem Dorn 3. Das Presswerkzeug 11 umschließt die Statorsegmente 2 und den dritten Bereich des Dorns 3.

In der Fig. 4 ist schematisch das Verfahren zum Herstellen eines Stators gemäß einer beispielhaften Ausführungsform der vorliegenden Erfindung dargestellt. Im ersten Schritt 100 werden die Statorsegmente 2 vom ersten Bereich 3.1 des Dorns 3 aufgenommen (siehe Fig. 3) und zur Presse B transportiert. Im zweiten Schritt 200 werden die Statorsegmente 2 in der Presse B verpresst (siehe Fig. 4). Der dritte Bereich 3.3 des Dorns 3 verhindert dabei ein zu starkes Überpressen der Statorsegmente 2. Anschließend werden die Statorsegmente 2 zur Gehäusezuführung C transportiert. Dort wird im dritten Schritt 300 ein Gehäuse zugeführt und erwärmt. Anschließend führt der Dorn 3 die verpressten Statorsegmente 2 in das Gehäuse ein.

### Bezugszeichenliste

- 1: Vorrichtung
- 2: Statorsegment
- 3: Dorn
- 3.1: erster Bereich
- 3.2: zweiter Bereich
- 3.3: dritter Bereich
- 4: Dornarm
- 5: Turm
- 6: Axialantrieb
- 7: Kippantrieb
- 8: erster Elektromagnet
- 9: zweiter Elektromagnet
- 10: Messvorrichtung
- 11: Presswerkzeug
- 11.1: statischer Presswerkzeugteil
- 11.2: beweglicher Presswerkzeugteil
- 12: Förderband

- 100: erster Schritt
- 200: zweiter Schritt
- 300: dritter Schritt

- A: Segmentzuführung
- B: Presse
- C: Gehäusezuführung
- D: Drehachse
- L: Längsachse
- R: axiale Richtung

- F₁: axiale Kraft
- F₂: radiale Kraft

## Patentansprüche

1. Vorrichtung (1) zum Fertigen eines Stators für eine elektrische Maschine, wobei die Vorrichtung (1) eine Segmentzuführung (A) zum Zuführen von Statorsegmenten (2), eine im Wesentlichen hohlzylinderförmige Presse (B) zum Verpressen der Statorsegmente (2) und eine Gehäusezuführung (C) zum Zuführen von Statorgehäusen aufweist,
wobei die Vorrichtung (1) einen Dorn (3) zur Aufnahme der Statorsegmente (2) aufweist,
wobei der Dorn (3) in axialer Richtung (R) einen ersten Bereich (3.1), einen zweiten Bereich (3.2) und einen dritten Bereich (3.3) aufweist,
wobei der erste Bereich (3.1) einen in axialer Richtung (R) im Wesentlichen konstanten ersten Radius aufweist, der zweite Bereich (3.2) einen in axialer Richtung (R) im Wesentlichen konstanten zweiten Radius aufweist und der dritte Bereich (3.3) einen in axialer Richtung (R) im Wesentlichen konstanten dritten Radius aufweist,
wobei der erste Radius größer ist als der zweite Radius und der zweite Radius größer ist als der dritte Radius.

2. Vorrichtung (1) nach Anspruch 1, **dadurch gekennzeichnet, dass** der Dorn (3) von der Segmentzuführung (A) zur Presse (B), von der Presse (B) zur Gehäusezuführung (C) und von der Gehäusezuführung (C) zur Segmentzuführung (A) bewegbar ist,
wobei vorzugsweise der Dorn (3) an einem beweglichen Dornarm (4) an einem Turm (5) der Vorrichtung (1) angeordnet ist, wobei der Turm (5) zentral zwischen der Segmentzuführung (A), der Presse (B) und der Gehäusezuführung (C) angeordnet ist.

3. Vorrichtung (1) nach einem der vorhergehenden Ansprüche, wobei der Dorn (3) zur Drehung um seine Längsachse (L) einen Axialantrieb (6) aufweist,
wobei der Dorn (3) vorzugsweise zur Drehung um eine orthogonal zur Längsachse angeordnete Drehachse (D) einen Kippantrieb (7) aufweist,
wobei vorzugsweise der Dorn (3) parallel zur Haupterstreckungsrichtung des Turmes (5) verfahrbar ist.

4. Vorrichtung (1) nach einem der vorhergehenden Ansprüche, wobei der erste Bereich (3.1) zur Aufnahme der Statorsegmente (2) in der Segmentzuführung (A) und zum Zuführen der aufgenommenen Statorsegmente (2) zur Presse (B) konfiguriert ist und wobei der dritte Bereich (3.3) zur Vermeidung eines zu starken Pressens der Statorsegmente (2) während des Verpressens der Statorsegmente (2) in der Presse (B) konfiguriert ist
und wobei der zweite Bereich (3.2) zur Aufnahme der Statorsegmente (2) in der Presse (B) nach dem Verpressen und zum Zuführen der verpressten Statorsegmente (2) zur Gehäusezuführung (C) konfiguriert ist,
wobei dazu der erste Bereich (3.1) vorzugsweise einen ersten Elektromagneten (8) und/oder vorzugsweise eine als Ausrichtkontur zum Ausrichten der Statorsegmente (2) auf dem ersten Bereich (3.1) konfigurierte Oberflächenstruktur aufweist und wobei der zweite Bereich (3.1) vorzugsweise einen zweiten Elektromagneten (9) aufweist.

5. Vorrichtung (1) nach einem der vorhergehenden Ansprüche, wobei der dritte Bereich (3.3) eine Messvorrichtung (10) zum Erkennen eines elektrischen Kontaktes zwischen der Oberfläche des dritten Bereiches (3.3) und der Presse (B) aufweist.

6. Verfahren zum Herstellen eines Stators für eine elektrische Maschine aus Statorsegmenten (2) mit einer Vorrichtung (1) gemäß einem der vorhergehenden Ansprüche,
wobei in einem ersten Schritt (100) die Statorsegmente (2) in der Segmentzuführung (A) vom ersten Bereich (3.1) des Dorns (3) aufgenommen, im Wesentlichen hohlzylinderförmig auf der Oberfläche des ersten Bereiches (3.1) angeordnet und der Presse (B) zugeführt werden,
wobei in einem zweiten Schritt (200) die Statorsegmente (2) in der Presse (B) hohlzylinderförmig verpresst werden, wobei der dritte Bereich (3.3) während des Verpressens derart in der Presse (B) angeordnet wird, dass durch den dritten Bereich (3.3) ein Überpressen der Statorsegmente (2) verhindert wird, wobei die Statorsegmente (2) nach dem Verpressen auf der Oberfläche des zweiten Bereiches (3.2) angeordnet werden und der Gehäusezuführung (C) zugeführt werden,
wobei in einem dritten Schritt (300) der Gehäusezuführung (C) ein Gehäuse zugeführt wird, wobei das Gehäuse in der Gehäusezuführung (C) erhitzt wird, wobei die Statorsegmente (2) mittels des Dorns (3) im Gehäuse angeordnet werden.

7. Verfahren nach Anspruch 6, wobei im ersten Schritt (100) zum Anordnen der Statorsegmente (2) auf der Oberfläche des ersten Bereiches (3.1) der Dorn (3) um seine Längsachse (L) gedreht wird und gleichzeitig die Statorsegmente (2) dem Dorn (3) zugeführt werden, wobei die Statorsegmente (2) auf den ersten Bereich (3.1) aufgewickelt werden,
wobei vorzugsweise die Statorsegmente (2) beim Aufwickeln von der Ausrichtkontur des ersten Bereichs (3.1) ausgerichtet werden.

8. Verfahren nach einem der Ansprüche 6 oder 7, wobei die Statorsegmente (2) im ersten Schritt (100) während des Aufnehmens und während des Zuführens zur Presse (B) durch den ersten Elektromagneten (8) am ersten Bereich (3.1) gehalten werden
und/oder im zweiten Schritt (200) die Statorsegmente (2) während des Zuführens zur Gehäusezuführung (C) durch den zweiten Elektromagneten (9) am zweiten Bereich (3.2) gehalten werden
und/oder im dritten Schritt (300) die Statorsegmente (2) während des Anordnens im Gehäuse durch den zweiten Elektromagneten (9) am zweiten Bereich (3.2) gehalten werden und nach dem Anordnen der zweite Elektromagnet (3.2) abgeschaltet wird und der Dorn (3) von den Statorsegmenten (2) weg verfahren wird.

9. Verfahren nach einem der Ansprüche 6 bis 8, wobei im zweiten Schritt (200) die Statorsegmente (2) von der Presse (B) zu einem Hohlzylinder verpresst werden,
wobei durch die Presse (B) zum Verpressen eine radiale Kraft (F₂) auf die Statorsegmente (2) ausgeübt wird, wobei das Ausüben der radialen Kraft (F₂) auf die Statorsegmente (2) beendet wird, wenn ein elektrischer Kontakt zwischen dem dritten Bereich (3.3) und der Presse (B) erkannt wird,
wobei vorzugsweise nach dem Verpressen Presswerkzeuge (11) der Presse (B) von den Statorsegmenten (2) beabstandet werden.

10. Verfahren nach einem der Ansprüche 6 bis 9, wobei im ersten Schritt (100) der Dorn (3) mit seiner Längsachse (L) im Wesentlichen parallel zur Haupterstreckungsrichtung der einzelnen Statorsegmente (2) ausgerichtet wird und während des Zuführens zur Presse (B) mit seiner Längsachse (L) parallel zur Haupterstreckungsrichtung der Presse (B) ausgerichtet wird.

## Claims

1. A device (1) for producing a stator for an electrical machine, wherein the device (1) has a segment feed (A) for feeding stator segments (2), a substantially hollow-cylindrical press (B) for pressing the stator segments (2) and a housing feed (C) for feeding stator housings, wherein the device (1) has a mandrel (3) for collecting the stator segments (2),
wherein the mandrel (3) has a first region (3.1), a second region (3.2) and a third region (3.3), in the axial direction (R),
wherein the first region (3.1) has a first radius that is substantially constant in the axial direction (R), the second region (3.2) has a second radius that is substantially constant in the axial direction (R), and the third region (3.3) has a third radius that is substantially constant in the axial direction (R),
wherein the first radius is greater than the second radius and the second radius is greater than the third radius.

2. The device (1) according to claim 1, **characterised in that** the mandrel (3) can be moved from the segment feed (A) to the press (B), from the press (B) to the housing feed (C), and from the housing feed (C) to the segment feed (A),
wherein the mandrel (3) is preferably arranged on a movable mandrel arm (4) on a tower (5) of the device (1), wherein the tower (5) is arranged centrally between the segment feed (A), the press (B), and the housing feed (C).

3. The device (1) according to any one of the preceding claims, wherein the mandrel (3) has an axial drive (6) for rotation about its longitudinal axis (L),
wherein the mandrel (3) preferably has a tilting drive (7) for rotation about a rotational axis (D) arranged orthogonally to the longitudinal axis,
wherein the mandrel (3) can preferably be moved parallel to the main extension direction of the tower (5).

4. The device (1) according to any one of the preceding claims, wherein the first region (3.1) is configured to collect the stator segments (2) in the segment feed (A) and to feed the collected stator segments (2) to the press (B)
and wherein the third region (3.3) is configured to prevent excessive pressing of the stator segments (2) during the pressing of the stator segments (2) in the press (B) and wherein the second region (3.2) is configured to collect the stator segments (2) in the press (B) after pressing and to feed the pressed stator segments (2) to the housing feed (C), wherein for this purpose the first region (3.1) preferably has a first electromagnet (8) and/or preferably a surface structure that is configured as an alignment contour for aligning the stator segments (2) on the first region (3.1)
and wherein the second region (3.1) preferably has a second electromagnet (9).

5. The device (1) according to any one of the preceding claims, wherein the third region (3.3) has a measuring device (10) for detecting an electrical contact between the surface of the third region (3.3) and the press (B).

6. A method for producing a stator for an electrical machine from stator segments (2), having a device (1) according to any one of the preceding claims,
wherein in a first step (100) the stator segments (2) in the segment feed (A) are received by the first region (3.1) of the mandrel (3), arranged substantially in the form of a hollow cylinder on the surface of the first region (3.1) and fed to the press (B),
wherein in a second step (200) the stator segments (2) are pressed in the press (B) in the form of a hollow cylinder, wherein the third region (3.3) is arranged in the press (B) during the pressing in such a way that the third region (3.3) prevents over-pressing of the stator segments (2), wherein the stator segments (2) are arranged on the surface of the second region (3.2) after the pressing and fed to the housing feed (C),
wherein in a third step (300) a housing is fed to the housing feed (C), wherein the housing is heated in the housing feed (C), wherein the stator segments (2) are arranged in the housing by means of the mandrel (3).

7. The method according to claim 6, wherein in the first step (100) for arranging the stator segments (2) on the surface of the first region (3.1), the mandrel (3) is rotated about its longitudinal axis (L) and at the same time the stator segments (2) are fed to the mandrel (3), wherein the stator segments (2) are wound onto the first region (3.1),
wherein the stator segments (2) are preferably aligned by the alignment contour of the first region (3.1) during winding.

8. The method according to any one of claims 6 or 7, wherein in the first step (100) the stator segments (2) are held on the first region (3.1) by the first electromagnet (8) while being collected and fed to the press (B)
and/or in the second step (200) the stator segments (2) are held on the second region (3.2) by the second electromagnet (9) while being fed to the housing feed (C) and/or in the third step (300) the stator segments (2) are held on the second region (3.2) by the second electromagnet (9) while being arrangement in the housing, and after the arrangement the second electromagnet (3.2) is switched off and the mandrel (3) is moved away from the stator segments (2).

9. The method according to any one of claims 6 to 8, wherein in the second step (200) the stator segments (2) are pressed by the press (B) to form a hollow cylinder,
wherein for pressing, the press (B) exerts a radial force (F₂) on the stator segments (2), wherein the exertion of the radial force (F₂) on the stator segments (2) is terminated when an electrical contact is detected between the third region (3.3) and the press (B),
wherein after pressing, pressing tools (11) of the press (B) are preferably moved away from the stator segments (2).

10. The method according to any one of claims 6 to 9, wherein in the first step (100) the mandrel (3) is aligned with its longitudinal axis (L) substantially parallel to the main extension direction of the individual stator segments (2) and during feeding to the press (B) the mandrel is aligned with its longitudinal axis (L) parallel to the main extension direction of the press (B).

## Revendications

1. Dispositif (1) de fabrication d'un stator destiné à une machine électrique, le dispositif (1) comportant une alimentation en segments (A) servant à acheminer des segments de stator (2), une presse sensiblement en forme de cylindre creux (B) servant à presser les segments de stator (2) et une alimentation en boîtiers (C) servant à acheminer des boîtiers de stator,
le dispositif (1) comportant un mandrin (3) servant à recevoir les segments de stator (2), le mandrin (3) comportant une première région (3.1), une deuxième région (3.2) et une troisième région (3.3) dans la direction axiale (R),
la première région (3.1) comportant un premier rayon sensiblement constant dans la direction axiale (R), la deuxième région (3.2) comportant un deuxième rayon sensiblement constant dans la direction axiale (R) et la troisième région (3.3) comportant un troisième rayon sensiblement constant dans la direction axiale (R),
le premier rayon étant supérieur au deuxième rayon et le deuxième rayon étant supérieur au troisième rayon.

2. Dispositif (1) selon la revendication 1, **caractérisé en ce que** le mandrin (3) peut se déplacer de l'alimentation en segments (A) à la presse (B), de la presse (B) à l'alimentation en boîtiers (C) et de l'alimentation en boîtiers (C) à l'alimentation en segments (A),
de préférence, le mandrin (3) étant agencé sur un bras mobile de mandrin (4) sur une tour (5) du dispositif (1), la tour (5) étant agencée au centre entre l'alimentation en segments (A), la presse (B) et l'alimentation en boîtiers (C).

3. Dispositif (1) selon l'une quelconque des revendications précédentes, le mandrin (3) comportant un entraînement axial (6) lui permettant de tourner autour de son axe longitudinal (L),
le mandrin (3) comportant de préférence un entraînement de basculement (7) lui permettant de tourner autour d'un axe de rotation (D) disposé orthogonalement à l'axe longitudinal, de préférence le mandrin (3) pouvant se déplacer parallèlement à la direction d'extension principale de la tour (5).

4. Dispositif (1) selon l'une quelconque des revendications précédentes, dans lequel la première région (3.1) est conçue pour recevoir les segments de stator (2) dans l'alimentation en segments (A) et pour acheminer les segments de stator reçus (2) vers la presse (B)
et dans lequel la troisième région (3.3) est conçue pour éviter un pressage excessif des segments de stator (2) pendant le pressage des segments de stator (2) dans la presse (B) et dans lequel la deuxième région (3.2) est conçue pour recevoir les segments de stator (2) dans la presse (B) après le pressage et pour acheminer les segments de stator pressés (2) vers l'alimentation en boîtiers (C),
à cet effet, la première région (3.1) comportant de préférence un premier électroaimant (8) et/ou de préférence une structure de surface conçue comme un contour d'alignement pour aligner les segments de stator (2) sur la première région (3.1)
et la deuxième région (3.1) comportant de préférence un second électroaimant (9).

5. Dispositif (1) selon l'une quelconque des revendications précédentes, dans lequel la troisième région (3.3) comporte un dispositif de mesure (10) servant à détecter un contact électrique entre la surface de la troisième région (3.3) et la presse (B).

6. Procédé de fabrication d'un stator destiné à une machine électrique à partir de segments de stator (2) au moyen d'un dispositif (1) selon l'une quelconque des revendications précédentes,
dans lequel, dans une première étape (100), les segments de stator (2) sont reçus dans l'alimentation en segments (A) par la première région (3.1) du mandrin (3), sont disposés sensiblement sous la forme de cylindre creux sur la surface de la première région (3.1) et acheminés vers la presse (B),
dans lequel, dans une deuxième étape (200), les segments de stator (2) sont pressés en forme de cylindre creux dans la presse (B), dans lequel la troisième région (3.3) pendant le pressage est disposée dans la presse (B) de manière à empêcher un pressage excessif des segments de stator (2) par la troisième région (3.3), les segments de stator (2) après le pressage étant disposés sur la surface de la deuxième région (3.2) et étant acheminés vers l'alimentation en boîtiers (C),
dans lequel dans une troisième étape (300), un boîtier est acheminé vers l'alimentation en boîtiers (C), le boîtier étant chauffé dans l'alimentation en boîtiers (C), les segments de stator (2) étant disposés dans le boîtier au moyen du mandrin (3).

7. Procédé selon la revendication 6, dans lequel dans la première étape (100) pour disposer les segments de stator (2) sur la surface de la première région (3.1), le mandrin (3) tourne autour de son axe longitudinal (L) et simultanément les segments de stator (2) sont acheminés vers le mandrin (3), les segments de stator (2) étant enroulés sur la première région (3.1),
de préférence, les segments de stator (2) étant alignés par le contour d'alignement de la première région (3.1) lors de l'enroulement.

8. Procédé selon l'une quelconque des revendications 6 ou 7, dans lequel les segments de stator (2) dans la première étape (100) sont maintenus par le premier électroaimant (8) dans la première région (3.1) pendant leur réception et leur acheminement vers la presse (B) et/ou dans la deuxième étape (200), les segments de stator (2) sont maintenus par le second électroaimant (9) dans la deuxième région (3.2) pendant leur acheminement vers l'alimentation en boîtiers (C)
et/ou dans la troisième étape (300), les segments de stator (2) sont maintenus dans la deuxième région (3.2) par le second électroaimant (9) pendant leur agencement dans le boîtier et après leur agencement le second électroaimant (3.2) est mis hors tension et le mandrin (3) est éloigné des segments de stator (2).

9. Procédé selon l'une quelconque des revendications 6 à 8, dans lequel dans la deuxième étape (200) les segments de stator (2) sont pressés par la presse (B) pour former un cylindre creux,
dans lequel une force radiale (F₂) est appliquée sur les segments de stator (2) par la presse (B) pour permettre le pressage, l'application de la force radiale (F₂) sur les segments de stator (2) prenant fin lorsqu'un contact électrique est détecté entre la troisième région (3.3) et la presse (B),
dans lequel de préférence après le pressage, les outils de pressage (11) de la presse (B) sont écartés des segments de stator (2).

10. Procédé selon l'une quelconque des revendications 6 à 9, dans lequel dans la première étape (100), le mandrin (3) est aligné par son axe longitudinal (L) sensiblement parallèlement à la direction d'extension principale des différents segments de stator (2) et est aligné par son axe longitudinal (L) parallèlement à la direction d'extension principale de la presse (B) pendant l'alimentation à la presse (B).
